# EUROPEAN PATENT SPECIFICATION

(11) **EP 4 438 689 B1**
(45) Date of publication and mention of the grant of the patent: **11.03.2026**
(21) Application number: 23382301.2
(22) Date of filing: 30.03.2023
(51) Int. Cl.: C09G 1/04, C23F 1/18, C23F 3/06

(54) **METHOD OF POLISHING AND BRIGHTENING A WORKPIECE OF COPPER OR COPPER ALLOY**
VERFAHREN ZUM POLIEREN UND AUFHELLEN EINES WERKSTÜCKES AUS KUPFER ODER KUPFERLEGIERUNG
PROCÉDÉ DE POLISSAGE ET D'ÉCLAIRCISSEMENT D'UNE PIÈCE DE CUIVRE OU D'ALLIAGE DE CUIVRE

(43) Date of publication of application: 02.10.2024
(73) Proprietor: Acondicionamiento Tarrasense, 08225 Terrassa (Barcelona) (ES)
(72) Inventor: MESEGUER GUALLAR, Antonio, 08225 TERRASSA (Barcelona) (ES); CALVET MOLINAS, Martí, 08225 TERRASSA (Barcelona) (ES); DOMÈNECH CASTELLS, Anna, 08225 TERRASSA (Barcelona) (ES); VILARÓ BATLLE, Sergi, 08225 TERRASSA (Barcelona) (ES); BAUTISTA, Lorenzo, 08225 TERRASSA (Barcelona) (ES); AUBOUY, Laurent, 08225 TERRASSA (Barcelona) (ES); AMANTIA, David, 08225 TERRASSA (Barcelona) (ES)
(74) Representative: Herrero & Asociados, S.L.

(56) References cited:
- EP-A2- 0 811 666
- CN-A- 112 323 068
- US-A1- 2005 173 670

## Description

### FIELD OF THE INVENTION

The present invention relates to a method of polishing and brightening a workpiece of copper or copper alloy. The method of the invention is especially useful in workpieces having a complex structure such as those produced by the additive manufacturing of metals.

### BACKGROUND OF THE INVENTION

The technique of polishing copper pieces, conventionally used, is a chemical mechanical process. This technique has been used in planar pieces. In general, the chemical mechanical process is a method that uses chemical oxidation and mechanical abrasion to remove material, by using chemical reaction and mechanical abrasion with abrasive particles. For example, the European patent EP0634465B1 describes a method of polishing a surface of copper, in which a polishing means comprise a composition of a colloidal suspension of SiO₂ particles is moved across the surface to be polished while exerting a polishing pressure, with which method a surface which is substantially plane, smooth, can be obtained. This mechanical step requires a simple structure to polish.

The patent application US2005173670 describes a method for polishing a copper film of a semiconductor device, the method comprises the steps of preparing a slurry containing H₂O₂ as an oxidizer and glycine as an inhibitor; providing the slurry onto a polishing pad; and contacting a copper film with the polishing pad. The patent is directed to copper film and therefore to non-complex structure.

Additive manufacturing is understood to describe a method by which an article is built by depositing, consolidating and bonding successive layers of material one on top of another. Now, the complex topology structures can now be efficiently and accurately fabricated by stacking layered materials with additive manufacturing technology. The surface roughness of the pieces obtained by additive manufacturing could impede the performance of the piece. This technology demands a new polish method of complex topology structures.

It is, therefore, necessary to develop new methods that are effective for complex structure pieces made of copper.

### SUMMARY OF THE INVENTION

The current invention solves the problem cited by disclosing a method of polishing and brightening a workpiece of copper or copper alloy. The method of the invention is simpler than the chemical mechanical method known in the art because it is not necessary to use any pad to polish the workpiece but only to introduce the piece in two different solutions.

The method according to the invention is characterized in comprises two steps, first, the copper or copper alloy piece is introduced in the iron salts aqueous solution and then is introduced in an oxidizing aqueous solution comprising fluoride-containing salt. The first step is to render a polished piece and the second step is to render a brightened piece, this second step cleans the oxides formed in the first step of the invention. After the two steps, the workpiece is a smooth and bright piece. In the method of the invention is not necessary to use any abrasive particles and therefore is carried out without them. The workpiece obtained with the method of the invention is not only polished, i.e, a workpiece with a smoother surface than the initial, but also a brightening surface. Bright workpiece provides superior corrosion resistance. This makes it perfect for use in industries that require high levels of protection against corrosive elements.

Therefore, the first object of the invention is a method of polishing and brightening a workpiece of copper or copper alloy wherein said method comprises the steps:
a) introducing the copper or copper alloy workpiece in an aqueous solution comprising iron salts and,
b) after step a) introducing the workpiece in an oxidizing aqueous solution comprising a copper oxidizer compound and a fluoride compound.

The term "copper alloy" means in the context of the present specification a mixture of two or more elements in which at least one component is copper.

The term "iron salts" means in the context of the present specification any water-soluble compounds of iron that are capable of liberating iron ions upon hydrolysis. The iron salt can be any iron salt of inorganic acid or iron salt of organic acid.

The term "copper oxidizer" means in the context of the present specification oxidizer any compound which may oxidize Cu to Cu⁺ or Cu²⁺.

The term "fluoride compound" includes any compound which comprises at least one fluorine atom.

### DETAILED DESCRIPTION OF THE INVENTION

Therefore, the first object of the invention is a method of polishing and brightening a workpiece of copper or copper alloy wherein said method comprises the steps:
a) introducing the copper or copper alloy workpiece in an aqueous solution comprising iron salts and,
b) after step a) introducing the workpiece in an oxidizing aqueous solution comprising a copper oxidizer compound and a fluoride compound.

Preferably the method of the invention is used when the workpiece is obtained by additive manufacturing. Additive manufacturing permits to make of complex workpieces with intricate internal structures. However, there is limited control over the final surface of the product and the roughness of the final product. The inherent surface roughness impedes the correct performance of the workpiece, regarding fatigue or pressure drops in heat exchangers and flow reactors, for example.

Therefore, in a particular aspect, the method of the invention refers to a method wherein the workpiece has been manufactured by additive manufacturing.

Preferably the temperature in step a) is between 30°C and 50°C. Preferably the workpiece is in the aqueous solution of step a) between 30 minutes and 120 minutes.

Preferably the temperature in step b) is between 18°C and 35°C. Preferably the workpiece is in an oxidizing solution comprising fluoride of step b) between 5 minutes and 120 minutes.

Preferably copper alloy refers to alloys of 90 wt% to 99 wt% copper. Preferably, the further components of the alloy are selected from one or more of boron, silicon, phosphorous, or another metal such as nickel, iron, cadmium, zinc, zirconium,cromiun tin, or titanium. In certain embodiments, the copper alloy is brass or bronze.

Preferably, the iron salt is an iron halide. More preferably, the iron halide is ferric chloride.

Preferably, fluoride compounds are selected from: tetramethyl ammonium fluoride ((CH₃)₄NF), ammonium fluoride (NH₄F), hydrogen fluoride (HF), fluorinated salts such as calcium fluoride, ammonium fluoride, aluminum fluoride, sodium fluoride, potassium fluoride, magnesium fluoride, silicon hexafluoride (H₂SiF₆), zirconium hexafluoride (H₂ZrF₆), potassium zirconium hexafluoride (K₂ZrF₆) and titanium hexafluoride (H₂TiF₆) and ammonium bifluoride, i.e., ammonium hydrogen bifluoride (NH₄HF₂), and combinations thereof. Particularly the fluoride compound is ABF (ammonium bifluoride).

The copper oxidizer preferably is selected from a peroxide compound, persulfate compound, persulfate compound, periodate salt, periodic acid, a perbromate salt, perbromic acid, iodate salt, iodic acid, bromate salt, bromic acid, permanganate compound, or quinone; particularly hydrogen peroxide and/or nitric acid.

Preferably the oxidizing solution comprising and acid. More preferably an organic acid. Particularly lactic acid. Preferably the oxidizing solution comprising a copper oxidizer compound at a concentration comprised between 15% and 40% and a fluoride compound at a concentration comprised between 1% and 5%. More preferably the oxidizing solution comprises an acid in an amount between 5% to 15%. Particularly the oxidizing solution consists of HNO₃, H₂O₂, lactic acid, ABF.

In the present invention the term "concentration" refers to weight concentration (w/w) when the solute is solid in the aqueous solution and volume concentration (v/v) when the solute is liquid in the aqueous solution.

### Examples

The following examples are merely illustrative of this invention and must not be interpreted in a sense that is limiting thereof.

### Example 1

A copper workpiece was introduced in two different baths. The initial weight of the workpiece was 11,5164 g and the initial Sa (arithmetical mean height of the surface µm) is 25,5 µm.

The first bath composition was an aqueous solution of 50g/L FeCl₃. The workpiece was in the first bath at 50°C. After 1 hour in the first bath, the workpiece was changed to a second bath. The composition of the second bath is shown in Table 1.

**Table 1. Second bath composition**

| Component | Percentage (% v/v) |
|---|---|
| HNO₃ | 15 |
| H₂O₂ | 15 |
| HLac | 10 |
| ABF | 2,5 |

The workpiece was 30 minutes at 30°C in the second bath.

The roughness of the surface workpiece was characterized by the parameter defined in the standard ISO 25178 "Geometrical product specifications - Surface texture". These parameters were measured initially and after applying the method of the invention. Table 2 showed the parameters measured in the initial and in the final workpiece.

**Table 2 Parameters**

| Parameter | Description | Initial | Final |
|---|---|---|---|
| Sq (µm) | Root mean square height of the surface | 31.3 | 10.1 |
| Ssk (µm) | Skewness of height distribution | -0.0329 | -0.04 |
| Sku (µm) | Kurtosis of height distribution | 2.56 | 2.84 |
| Sp (µm) | Maximum height of peaks | 96.6 | 30.1 |
| Sv (µm) | Maximum height of valleys | 89.6 | 45.9 |
| Sz (µm) | Maximum height of the surface | 186 | 76.0 |
| Sa (µm) | Arithmetical mean height of the surface | 25.5 | 8.08 |

The weight of the final piece was 9,2743 g.

The final workpiece obtained by the method of the invention was a sample smooth and bright, the decrease in weight was -19,47%, and the decrease in Sa was -68,31 %

### Example 2. A comparative example of the invention

A copper workpiece was introduced in an iron chloride and fluoride solution to explore a possible combination of the two steps in one step. The bath composition is shown in Table 3.

**Table 3. Bath composition of Example 2**

| Component | Percentage(%w/w) |
|---|---|
| FeCl₃ | 5 |
| ABF | 2,5 |

The initial weight of the workpiece was 11,7592 g and the initial Sa (arithmetical mean height of the surface) was 21,9 µm.

Table 4 shows the parameters measured in the initial and in the final workpiece after 1 hour treatment at 50°C.

**Table 4. Initial and final parameters of example 2**

| Parameter | Description | Initial | Final |
|---|---|---|---|
| Sq (µm) | Root mean square height of the surface | 27.4 | 8.88 |
| Ssk (µm) | Skewness of height distribution | 0.0119 | -0.0602 |
| Sku (µm) | Kurtosis of height distribution | 2.80 | 3.24 |
| Sp (µm) | Maximum height of peaks | 85.6 | 33.7 |
| Sv (µm) | Maximum height of valleys | 91.9 | 53.7 |
| Sz (µm) | Maximum height of the surface | 178 | 87.3 |
| Sa (µm) | Arithmetical mean height of the surface | 21.9 | 7.06 |

Although the roughness results reveal a good polishing and smooth appearance, with a decrease in Sa of 67.76%, the piece shows a poor, blackish finish, which can lead to corrosion problems. The final weight of the workpiece was 9,6621 which means a reduction of -17,83% during the process.

Surprisingly, as shown in example 1 of the invention, when the active compounds are used in two separate solutions the bright end piece is achieved.

### Example 3 Comparative example of the invention

A copper workpiece is introduced in fluoride-containing bath. The initial weight of the workpiece was 11,5672 g and the initial Sa (arithmetical mean height of the surface µm) is 25,7 µm.

The composition of the bath is described in Table 5. The workpiece was in the bath at 50°C.

**Table 5. Bath composition**

| Component | Percentage (% v/v) |
|---|---|
| HNO₃ | 15 |
| H₂O₂ | 15 |
| HLac | 10 |
| ABF | 2,5 |

Table 6 shows the parameters measured in the initial and in the final workpiece after 2 and a half hours of treatment.

**Table 6. Parameters**

| Parameter | Description | Initial | Final |
|---|---|---|---|
| Sq (µm) | Root mean square height of the surface | 31.6 | 15.9 |
| Ssk (µm) | Skewness of height distribution | -0.00684 | -0.0257 |
| Sku (µm) | Kurtosis of height distribution | 2.60 | 4.16 |
| Sp (µm) | Maximum height of peaks | 79.9 | 63.0 |
| Sv (µm) | Maximum height of valleys | 92.2 | 75.7 |
| Sz (µm) | Maximum height of the surface | 172 | 139 |
| Sa (µm) | Arithmetical mean height of the surface | 25.7 | 12.0 |

The weight of the final piece was 9,6569 g.

The final workpiece obtained by the method of the invention was a bright sample but not smooth, the decrease in weight was -16,51%, and the decrease in Sa was - 53,31%.

Example 1 in view of Example 3 shows an improvement in the reduction of the different parameters, also is relevant that the better results obtained in the Example 1 are obtained in less time.

**Table 7. Comparative results**

| Parameter | Initial | Final | Reduction(%) (Example 1) | Reduction (%) (Example 3) |
|---|---|---|---|---|
| Sq (µm) | 31.3 | 10.1 | 68 | 50 |
| Sp (µm) | 96.6 | 30.1 | 69 | 21 |
| Sv (µm) | 89.6 | 45.9 | 49 | 18 |
| Sz (µm) | 186 | 76.0 | 59 | 19 |
| Sa (µm) | 25.5 | 8.08 | 68 | 53 |

The surface parameters S provide us with information about the roughness in a given area.

Sa represents the mean of the difference between the mean height and the mean plane, i.e, the mean height of the peaks. The lower values show less roughness and therefore better polishing.

The Sp and Sv values show the maximum height of a peak and the maximum depth of a valley respectively. They are directly related to the Sz value that shows us the maximum difference between the highest peak and the deepest valley, that is, the sum of Sp and Sv. The smallest value of these parameters is sought to ensure better polishing.

The Sq parameter corresponds to the standard deviation of the height distribution and tells us how scattered the data are with respect to the mean. A more regular distribution in the height of the peaks will give us a smaller value of Sq.

At least all these parameters have been improved with the present invention.

## Claims

1. Method of polishing and brightening a workpiece of copper or copper alloy wherein said method comprises the steps:
a) introducing the copper or copper alloy workpiece in an aqueous solution comprising iron salts and,
b) after step a) introducing the workpiece in an oxidizing aqueous solution comprising a copper oxidizer compound and a fluoride compound.

2. Method according to claim 1 **characterized by** the workpiece is obtained by additive manufacturing.

3. Method according to any of claims 1 or 2 **characterized by** the temperature in step a) is between 30°C and 50°C.

4. Method according to claim 3 **characterized by** the time of step a) is between 30 minutes and 120 minutes.

5. Method according to any of claims 1 to 4 **characterized by** the temperature in step b) is between 18°C and 35°C.

6. Method according to claim 5 **characterized by** the time of step b) is between 5 minutes and 120 minutes.

7. Method according to any of claims 1 to 6 **characterized by** the iron salt is ferric chloride.

8. Method according to any of claims 1 to 7 **characterized by** the copper oxidizer is hydrogen peroxide and/or nitric acid.

9. Method according to any of the claims 1 to 8 **characterized by** the oxidizing solution comprising an acid.

10. Method according to claim 9 **characterized by** the oxidizing solution comprising a copper oxidizer compound at a concentration comprised between 15% and 40% a fluoride compound at a concentration comprised between 1% and 5% and an acid in an amount between 5% to 15%, wherein the term concentration refers to weight concentration (w/w) when the solute is solid in the aqueous solution and volume concentration (v/v) when the solute is liquid in the aqueous solution.

## Patentansprüche

1. Verfahren zum Polieren und Glätten eines Werkstücks aus Kupfer oder Kupferlegierung, wobei das Verfahren die folgenden Schritte umfasst:
a) Einführen des Werkstücks aus Kupfer oder Kupferlegierung in eine wässrige Lösung, die Eisensalze umfasst, und
b) nach Schritt a) Einführen des Werkstücks in eine oxidierende wässrige Lösung, die eine kupferoxidierende Verbindung und eine Fluoridverbindung umfasst.

2. Verfahren gemäß Anspruch 1, wobei das Werkstück mittels additiver Fertigung erhalten wird.

3. Verfahren gemäß einem der Ansprüche 1 oder 2, wobei die Temperatur in Schritt a) zwischen 30°C und 50°C liegt.

4. Verfahren gemäß Anspruch 3, wobei die Zeitdauer in Schritt a) zwischen 30 Minuten und 120 Minuten liegt.

5. Verfahren gemäß einem der Ansprüche 1 bis 4, wobei die Temperatur in Schritt b) zwischen 18°C und 35°C liegt.

6. Verfahren gemäß Anspruch 5, wobei die Zeitdauer in Schritt b) zwischen 5 Minuten und 120 Minuten liegt.

7. Verfahren gemäß einem der Ansprüche 1 bis 6, wobei es sich bei dem Eisensalz um Eisen(III)chlorid handelt.

8. Verfahren gemäß einem der Ansprüche 1 bis 7, wobei es sich bei der kupferoxidierenden Verbindung um Wasserstoffperoxid und/oder Salpetersäure handelt.

9. Verfahren gemäß einem der Ansprüche 1 bis 8, wobei die oxidierende Lösung eine Säure umfasst.

10. Verfahren gemäß Anspruch 9, wobei die oxidierende Lösung eine kupferoxidierende Verbindung, die in einer Konzentration zwischen 15% und 40% enthalten ist, eine Fluoridverbindung die in einer Konzentration zwischen 1% und 5% enthalten ist, und eine Säure die in einer Menge zwischen 5% und 15% enthalten ist, enthält, wobei sich der Ausdruck "Konzentration" auf eine Gewichtskonzentration (w/w) bezieht, wenn der gelöste Stoff in der wässrigen Lösung fest ist, und auf eine Volumenkonzentration (v/v) bezieht, wenn der gelöste Stoff in der wässrigen Lösung flüssig ist.

## Revendications

1. Procédé de polissage et de lustrage d'une pièce en cuivre ou en alliage de cuivre, ledit procédé comprenant les étapes suivantes :
a) introduction de la pièce en cuivre ou en alliage de cuivre dans une solution aqueuse comprenant des sels de fer et,
b) après l'étape a) introduction de la pièce dans une solution aqueuse oxydante comprenant un composé oxydant du cuivre et un composé fluorure.

2. Procédé selon la revendication 1 **caractérisé en ce que** la pièce est obtenue par fabrication additive.

3. Procédé selon l'une quelconque des revendications 1 ou 2 **caractérisé en ce que** la température de l'étape a) est comprise entre 30 °C et 50 °C.

4. Procédé selon la revendication 3 **caractérisé en ce que** la durée de l'étape a) est comprise entre 30 minutes et 120 minutes.

5. Procédé selon l'une quelconque des revendications 1 à 4 **caractérisé en ce que** la température de l'étape b) est comprise entre 18 °C et 35 °C.

6. Procédé selon la revendication 5 **caractérisé en ce que** la durée de l'étape b) est comprise entre 5 minutes et 120 minutes.

7. Procédé selon l'une quelconque des revendications 1 à 6 **caractérisé en ce que** le sel de fer est le chlorure ferrique.

8. Procédé selon l'une quelconque des revendications 1 à 7 **caractérisé en ce que** l'oxydant du cuivre est le peroxyde d'hydrogène et/ou l'acide nitrique.

9. Procédé selon l'une quelconque des revendication 1 à 8 **caractérisé en ce que** la solution oxydante comprend un acide.

10. Procédé selon la revendication 9 **caractérisé en ce que** la solution oxydante comprend un composé oxydant du cuivre à une concentration comprise entre 15% et 40%, un composé fluorure à une concentration comprise entre 1% et 5% et un acide en une quantité comprise entre 5% et 15%, dans lequel le terme concentration se réfère à la concentration pondérale (p/p) lorsque le soluté est solide dans la solution aqueuse et à la concentration volumique (v/v) lorsque le soluté est liquide dans la solution aqueuse.
